(19) **Europäisches Patentamt**
**European Patent Office**
**Office européen des brevets**

(11) **EP 2 330 472 A1**

(12) **EUROPEAN PATENT APPLICATION**

(43) Date of publication:
**08.06.2011 Bulletin 2011/23**

(51) Int Cl.:
**G05D 1/02** *(2006.01)*   **G01S 5/00** *(2006.01)*

(21) Application number: **09275070.2**

(22) Date of filing: **07.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **BAE Systems PLC**
**London SW1Y 5AD (GB)**

(72) Inventor: **The designation of the inventor has not yet been filed**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

(54) **Path determination**

(57)     The present invention relates to determining a suitable path for an unmanned vehicle. Accordingly there is a provided a system for following personnel comprising: detection means for detecting the location of one or more persons; storage means for recording said locations of one or more persons at a plurality of points in time; path determination means for determining a driveable path for a vehicle; control means for operating said vehicle to follow said one or more persons.

Figure 6

**Description**

The present invention relates to determining a suitable path for an unmanned vehicle.

There is a need for a robust system of path determination for unmanned ground vehicles as many factors need to be taken into account.

Embodiments of the present invention are intended to provide such a robust path determination method.

According to one aspect of the present invention there is provided a system for following personnel comprising: detection means for detecting the location of one or more persons; storage means for recording said locations of one or more persons at a plurality of points in time; path determination means for determining a driveable path for a vehicle; control means for operating said vehicle to follow said one or more persons.

Preferably the the person carrys a GPS enabled handheld computer that transmits GPS locations at intervals in time back to system.

Advantageously, the system is located on the vehicle.

Preferably the vehicle can, if ordered, stop following one person and start following another person providing it has been recording the locations of both persons in order pessimist to determine a driveable path

The invention may be performed in various ways, and, by way of example only, embodiments thereof will now be described, reference being made to the accompanying drawings with like reference numerals in which:

Figure 1 is a drawing showing an illustration of a vehicle and a person;
Figure 2 is a drawing showing the illustration of Figure 1 with the person beginning to move;
Figure 3 is a drawing showing the illustration of Figure 2 after the person has moved away from the vehicle and the person has left a trail of "digital breadcrumbs" at points at which he has walked;
Figure 4 is a drawing showing the illustration of Figure 3 after the vehicle has moved to follow the person using the trail of "digital breadcrumbs";
Figure 5 is a drawing showing an illustration of a person that has left a trail of "digital breadcrumbs" at points at which he has walked;
Figure 6 is a drawing illustrating how an embodiment of the invention recreates a driveable path from the trail of "digital breadcrumbs" left by the person in Figure 5;
Figure 7 is a drawing illustrating how an embodiment of the invention determines vector information for each "digital breadcrumb";
Figure 8 is a drawing illustrating how an embodiment of the invention determines a driveable path based on the "digital breadcrumbs";
Figure 9 is a drawing illustrating a first step in an example of how a vehicle according to an embodiment of the invention would follow a trail of "digital breadcrumbs" left by a person as they are walking;
Figure 10 is a drawing illustrating a second step of the example in Figure 9 where the person and vehicle have advanced;
Figure 11 is a further drawing illustrating a third step of the examples in Figures 9 & 10;
Figure 12 is a drawing illustrating a vehicle following the "digital breadcrumbs" of a group of people;
Figure 13 is a drawing illustrating the first step in how a vehicle overrides the process of following "digital breadcrumbs" and goes to a specific point as quickly and directly as possible according to an embodiment of the invention; and
Figure 14 is a drawing illustrating the second step of the process stated in Figure 13, where the vehicle computes a path to the specific point.

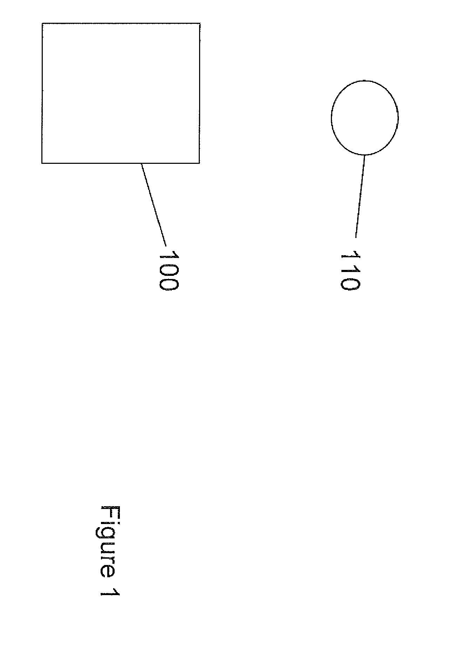

Referring now to Figure 1, there is shown a person 110 and a vehicle 100. The person 110, in the preferred embodiment, carries a handheld device equipped with a GPS location sensor and which is in regular and constant communication with the vehicle 100 over a wireless network such as 802.11g or similar. The handheld device, for example, can be one of many portable computing devices ranging from a mobile phone to a laptop or tablet computer, either in a standard consumer configuration or ruggedised. Alternatively, several different types of device can be used depending on command structure, with the commander being provided with a laptop with full command functionality and the rest of a group being provided with handheld personal digital assistants (PDAs) or mobile phones.

Alternatively, rather than carrying a hand-held device, the vehicle 100 could be equipped with sensors to detect the person 110, for example LIDAR or mm-wave RADAR, it is meant to follow to enable the vehicle to determine that persons position at regular intervals relative to the position of the vehicle. If the vehicle is equipped with GPS, then it can plot this relative position and determine a GPS position for that person 100.

In the case where the vehicle 100 is not equipped with GPS capability, or where the vehicle is in a GPS-denied environment, a navigation filter that fuses together a number of different navigation sources, such as an inertial measurement unit (IMU), odometry and simultaneous location and mapping (SLAM) data. For example, odometer data from the wheels of the vehicle could be used to determine the distance travelled and use of odometer data from all wheels allows a degree of compensation for skidding etc.

In a further alternative, the person or persons 110 that the vehicle 100 is following could be tagged with some form of electronic marker to identify them to the vehicle, such as a RFID tag or GPS tracking tag as a separate item from any handheld device(s) with which the person or persons 110 issue orders to the vehicle 100. These tags need to be readable by the vehicle 100, i.e. by the tags actively transmitting to the vehicle or by the vehicle 100 interrogating passive tags at regular intervals.

The essential feature is that vehicle 100 needs to know the positions of the person 110 over time by some means and these positions at intervals in time are hereby termed digital breadcrumbs 120. Preferably, these digital breadcrumbs 120 are generated at regular intervals, for example once a second, and the position information for the person 110 stored in the digital breadcrumb is stored, preferably in the vehicle computer, but the computer controlling the vehicle could be located remotely from the vehicle in an alternative embodiment.

As the person 110 moves they leave, along the route they take, a virtual trail of these digital breadcrumbs 120 for the vehicle 100 to follow.

Before, during or after moving, the person 100 uses the hand-held device to order the vehicle 110 into "follow-me" mode, i.e. to follow their digital breadcrumb trail.

The vehicle 100 can continuously store digital breadcrumbs for all of the people 110 that carry handheld devices equipped with GPS trackers regardless of whether it has been put into "follow-me" mode, i.e. when it is waiting for orders. This enables it to follow any one of them should an order be issued by that person to follow them.

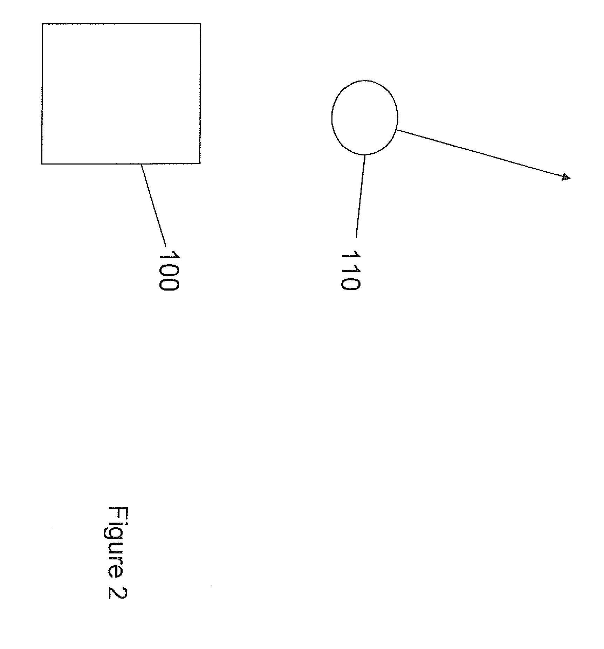

Referring now to Figure 2, vehicle 100 has stayed in the same place as in Figure 1 but person 110 has started moving away from the vehicle 100. At this point a digital breadcrumb 120 will be left at the position the person 110 started in.

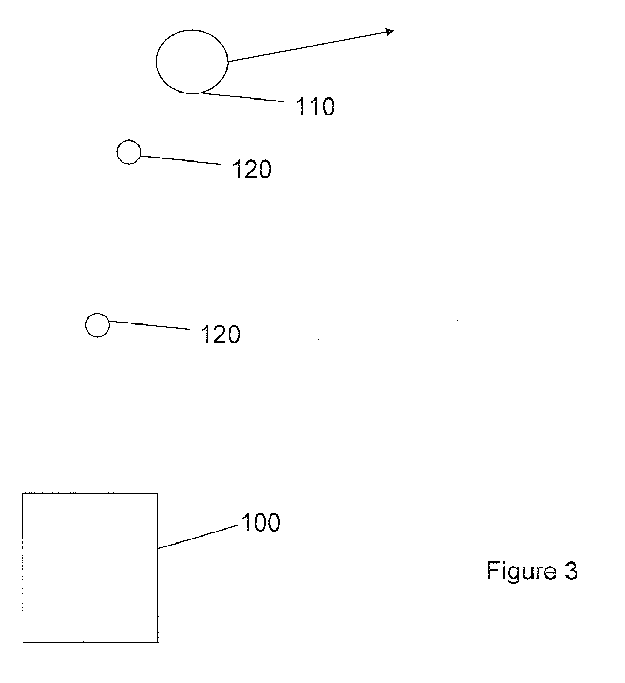

Referring now to figure 3, it can be seen that person 110 has moved away from vehicle 100. Vehicle 100 has not yet started moving as the person 110 has not yet moved far enough away from the vehicle 100 to trigger the vehicle 100 to start following the person 110. The person 110, however, has started laying a trail of digital breadcrumbs 120. It should be noted that the vehicle in this instance has been programmed to only follow at a certain distance from the person it is ordered to follow, thereby maintaining a safe distance at all times from that person to avoid colliding with that person.

In this embodiment, onboard the vehicle 100, there is provided a computer (or computers) that receive(s) the positions of the digital breadcrumbs 120 from the handheld device carried by the person 110 and these digital breadcrumbs 120 are stored in the computer memory.

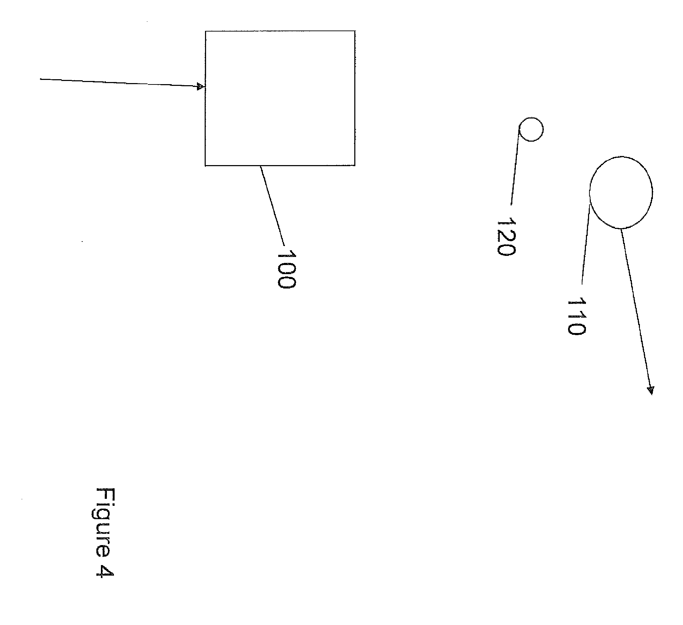

Referring now to figure 4, the vehicle 100 is shown to have started moving, following a path formed by its computer based on a curve or set of curves fitted to the digital breadcrumb points 120. By following the path chosen by the person 110, it is not as necessary to fit the vehicle 100 with sensors to detect either personnel or drivable terrain as, by definition, the person will have been able to walk along the path defined by the digital breadcrumb 120.

It should be noted that not all vehicles can drive over all terrain that a person can walk over so the person being followed by the vehicle should be instructed not to take too rugged or difficult a path to avoid the vehicle 100 getting stuck.

Further, it should also be noted that the vehicle 100 is preferably fitted with terrain-sensing abilities as a precaution against being led over difficult terrain by the person 110 it is following. It is also preferable for the vehicle 100 to be able to detect personnel and other vehicles as these could conceivably cross the virtual trail created by the digital breadcrumbs 120 of the person 110 being followed.

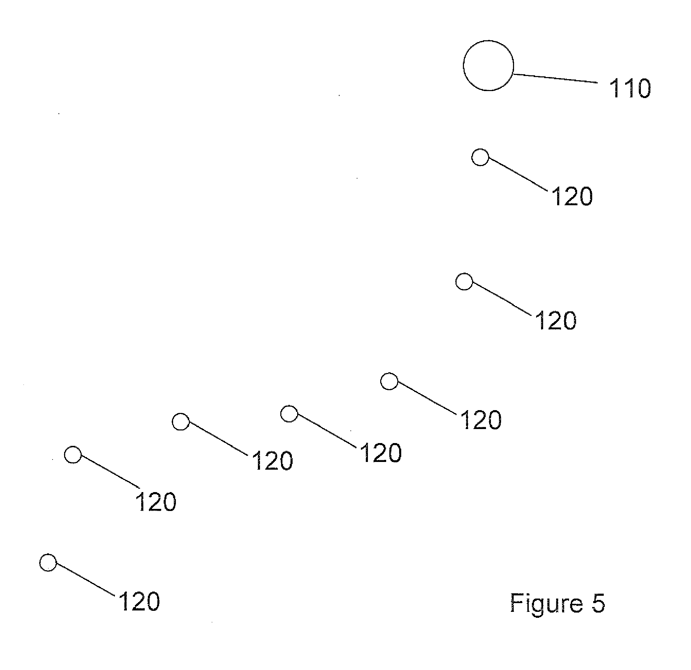

Referring now to Figure 5, there is shown a trail of digital breadcrumbs 120 as would be left by a person 110.

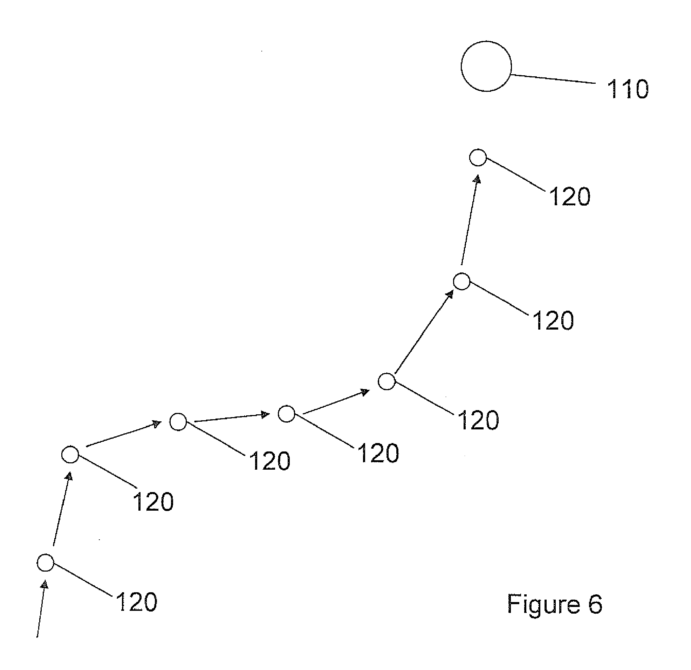

Referring now to Figure 6, there is shown the path determined by the computer that was taken by the person 110 between the digital breadcrumbs 120.

Referring now to Figure 6, there is shown by arrowed lines the actual path taken by the person 110 between the points 120. It should be noted that the person 110 might have taken the path for various reasons, including an obstruction such as a building or a hazard such as a cliff and, in some instances, there is only a narrow path possible where, for example, buildings exist on both sides of a path and thus the vehicle 100 has to carefully follow the path taken by the person 110 it is following to avoid crashing into either building.

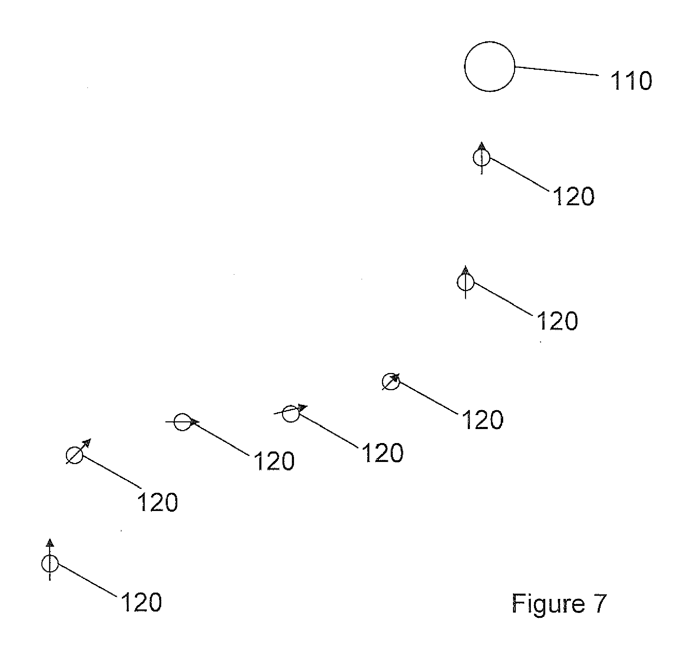

Referring now to Figure 7, there is now shown the vectors 120 as computed by the computer(s) on-board the vehicle 100 to correspond to the actual path taken by the person 110 in figure 6. The path taken by the vehicle 100 will be the closest feasible path to that taken by the person 110. The exact shape of the path isn't completely predictable and will depend on a number of factors including geometry, environmental conditions and the path taken but using obstacle avoidance will ensure that the generated path is collision free.

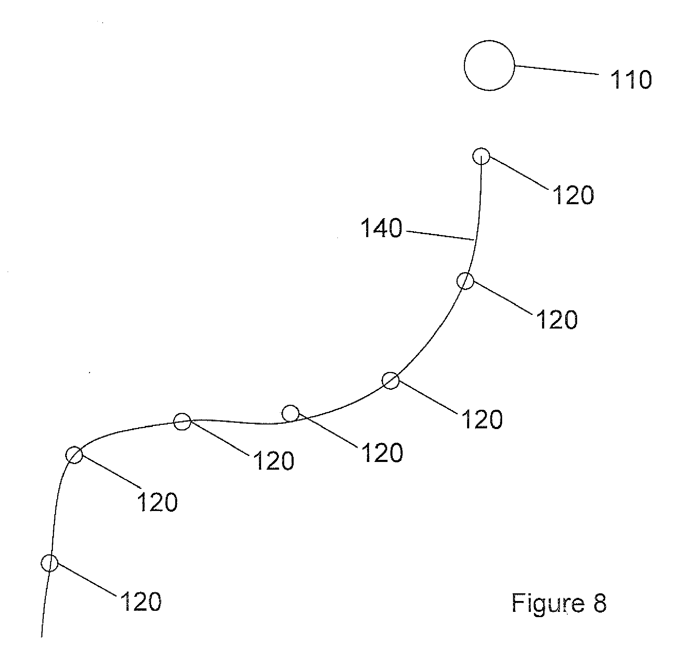

Referring now to Figure 8, there is now shown the curve that is fitted by the computer(s) onboard the vehicle 100 to the vectors 120 determined previously shown in Figure 7. Non-linear optimisation techniques are used to calculate two input functions $v(s)$ and $k(s)$ where v, is velocity, k, is curvature and s, is distance along the trajectory. By integrating $k(s)$ the heading is calculated at a given s:

$$k(s) = k_0 + \Delta k(s)$$

$$\vartheta(s) = \vartheta_0 + \Delta\vartheta(s) \qquad \text{where } \Delta\vartheta(s) = \int_0^s k(s)ds$$

$$x(s) = x_0 + \Delta x(s) \quad \text{where } \Delta x(s) = \int_0^s \cos(\vartheta(s))ds$$

$$y(s) = y_0 + \Delta y(s) \text{ where } \Delta y(s) = \int_0^s \sin(\vartheta(s))ds$$

$\Delta k(s)$ is defined by a set of parameters $\underline{P}$ where the function is defined between zero and some upper limit, $s_f$. The vector $\underline{Q}$ is then defined as $[\underline{P}\ s_f]$.

Non-linear programming is used to find $\underline{Q}$ such that $k(s_f)=k_f$, $\vartheta(s_f)=\vartheta_f$, $x(s_f)=x_f$ and $y(s_f)=y_f$.

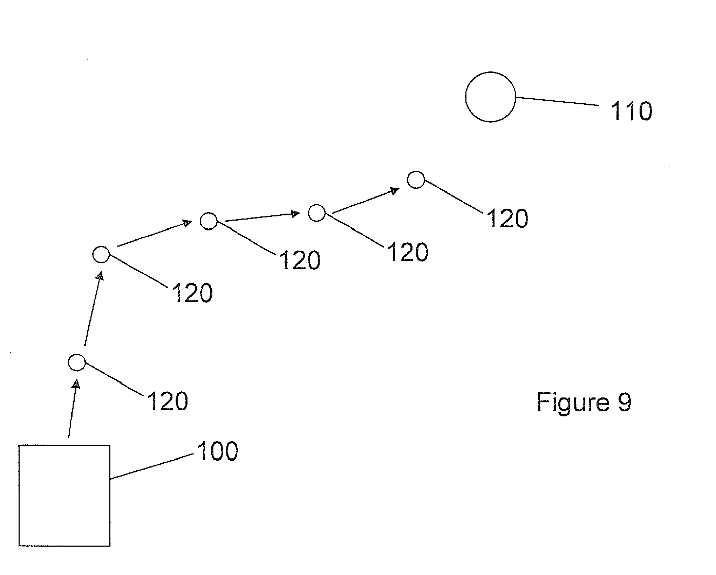

Referring now to figure 9, there is shown a vehicle 100 that is about to start following person 110. The person 110 has already left a trail of digital breadcrumbs 120 and has followed a path indicated by arrowed lines shown between the digital breadcrumbs 120.

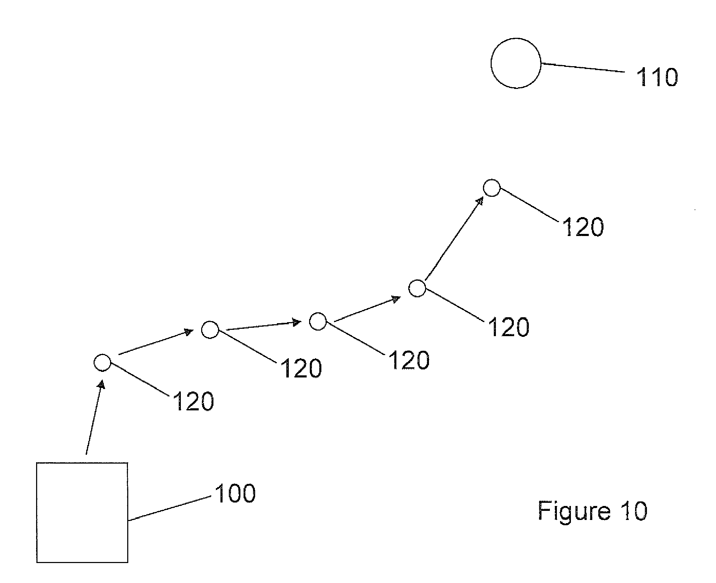

Referring now to figure 10, the vehicle 100 has started moving to follow a person 110. The vehicle 100 has advanced to the first digital breadcrumbs 120 so that it follows the person 110. The vehicle 100 has advanced to the first digital breadcrumb 120 in such a way so as to be angled substantially towards the next digital breadcrumb 120, as per the vectors 120' calculated in figure 7.

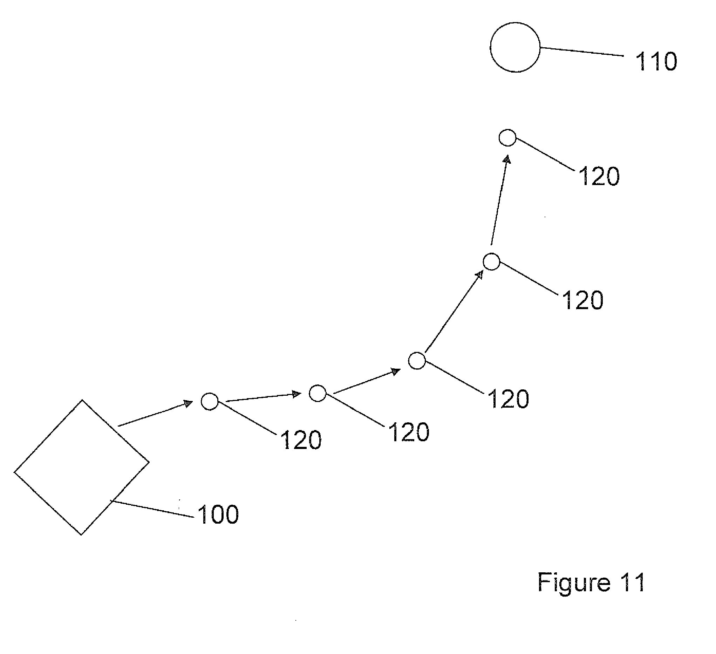

Referring now to figure 11, the vehicle 100 has now moved still further from its position in figure 10 along the path indicated by the digital breadcrumbs 120 so that it follows the person 110.

Whilst the person 100 being followed keeps moving, the vehicle 100 will follow the person 110 by advancing to the oldest digital breadcrumb 120 available at the same time as a new digital breadcrumb 120 is left by the person 110.

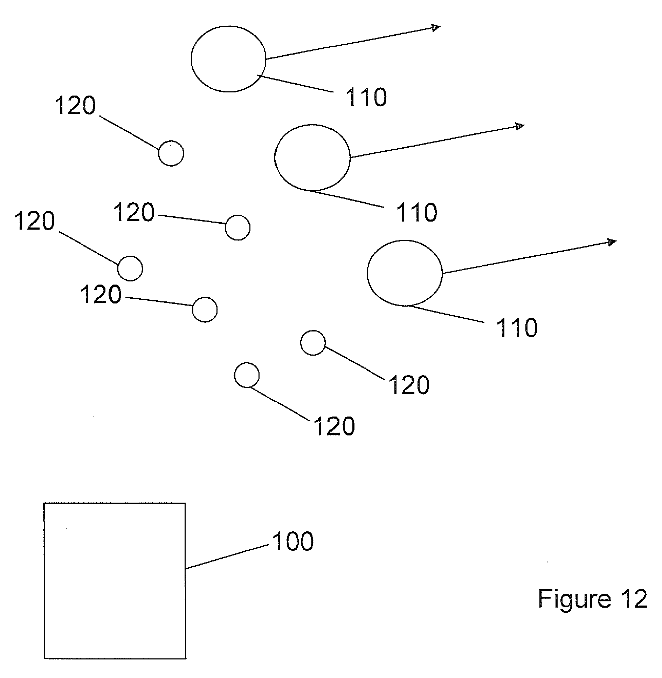

Referring now to figure 12, there is shown a vehicle 100 that is following a group of people 110, each person leaving a trail of "digital breadcrumbs" and to follow a group of people there several options, for example: follow the middle person, follow a weighted average, follow other averages; or follow the centre of mass.

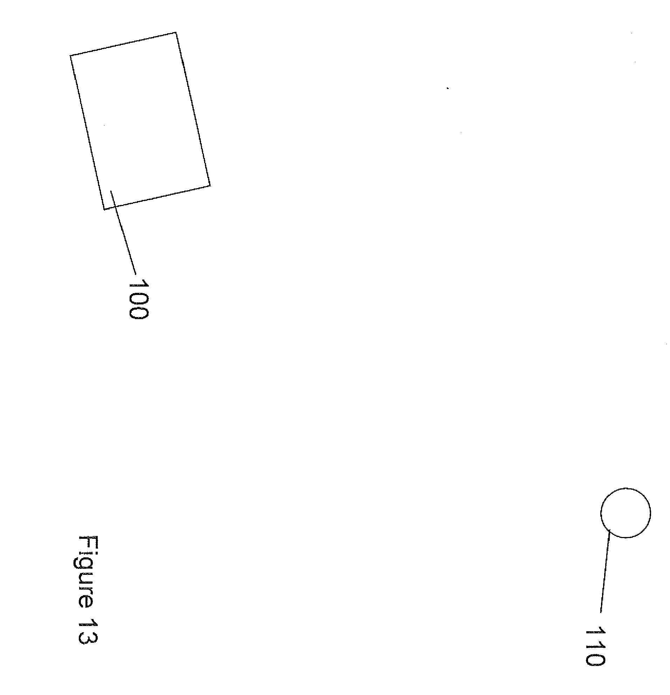

Referring now to Figure 13, there is shown a situation where the vehicle 100 has been ordered by the person 110 to "task on" the person 110, that is to say to proceed directly to that person 110 and to ignore following the path taken by that person as indicated by the digital breadcrumbs 120.

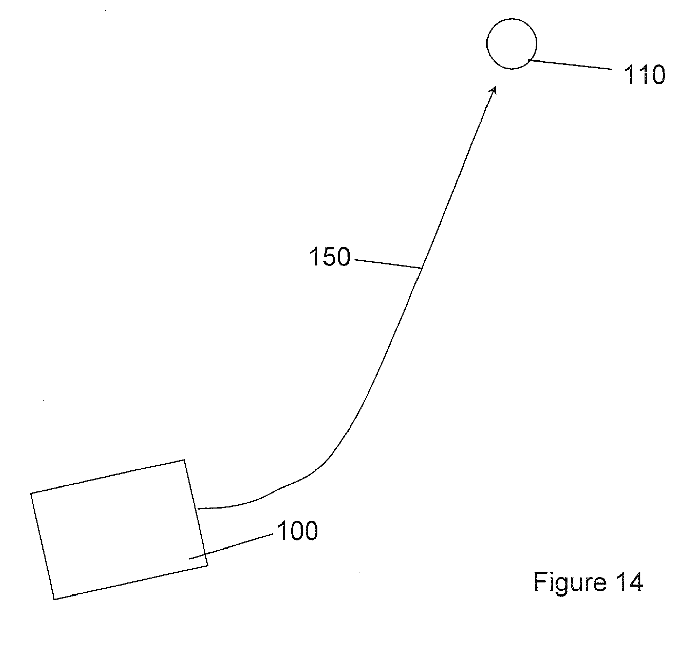

Referring now to Figure 14, there is illustrated the path determined by the vehicle 100 as the shortest driveable path to the person 100.

It should also be noted that the one or more of the handheld devices carried by the one or more persons 110 can be used to remotely drive the vehicle 100 if necessary.

To determine a driveable path using curve fitting, a graph is used to store a family of possible trajectories (trajectories are defined mathematically using the derivation above, and are such that the vehicle is able to drive them i.e. they obey minimum turning circle, etc.). Then this is mapped as a goal location to a vertex in the graph (the goal location is the vertex in the graph which is closest to the soldiers current location). Standard graph search techniques (e.g. A*) are used to select a sequence of edges, in this case trajectories, which reach the desired goal. During the search, each edge is evaluated against a set of cost maps such that the lowest cost solution is found i.e. edges which travel through obstacles are very high cost, edges which don't align with the path walked are high cost, etc.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1.  A system for following personnel comprising:

    detection means for detecting the location of one or more persons;
    storage means for recording said locations of one or more persons at a plurality of points in time;
    path determination means for determining a driveable path for a vehicle;
    control means for operating said vehicle to follow said one or more persons.

2.  A system according to claim 1 wherein the person carrys a GPS enabled handheld computer that transmits GPS locations at intervals in time back to system.

3.  A system according to any previous claim wherein said system is located on said vehicle.

4.  A system according to any previous claim wherein the vehicle can, if ordered, stop following one person and start following another person providing it has been recording the locations of both persons in order pessimist to determine a driveable path

100

110

Figure 1

Figure 2

Figure 3

Figure 4

Figure 5

Figure 6

Figure 7

Figure 8

Figure 9

100

120

120

120

120

120

110

Figure 10

Figure 11

Figure 12

100

110

Figure 13

Figure 14

EP 2 330 472 A1

Europäisches Patentamt
European Patent Office
Office européen des brevets

**EUROPEAN SEARCH REPORT**

Application Number

EP 09 27 5070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 834 220 B1 (BAIL GUNTHER [DE]) 21 December 2004 (2004-12-21) * the whole document * | 1-4 | INV. G05D1/02 G01S5/00 |
| X | KR 2008 0042782 A (JUNG SUNG WOOK [US]) 15 May 2008 (2008-05-15) * abstract * | 1-4 | |

| | |
|---|---|
| | TECHNICAL FIELDS SEARCHED (IPC) |
| | G01D G01S G05D |

The present search report has been drawn up for all claims

| Place of search | Date of completion of the search | Examiner |
|---|---|---|
| The Hague | 23 March 2010 | Shaalan, Mohamed |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

## ANNEX TO THE EUROPEAN SEARCH REPORT
## ON EUROPEAN PATENT APPLICATION NO.

EP 09 27 5070

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2010

| Patent document cited in search report | | Publication date | Patent family member(s) | | | Publication date |
|---|---|---|---|---|---|---|
| US 6834220 | B1 | 21-12-2004 | AT | 223080 | T | 15-09-2002 |
| | | | AU | 766338 | B2 | 16-10-2003 |
| | | | AU | 2347001 | A | 30-05-2001 |
| | | | CA | 2391089 | A1 | 25-05-2001 |
| | | | CZ | 20021609 | A3 | 11-09-2002 |
| | | | WO | 0137059 | A1 | 25-05-2001 |
| | | | DE | 10083544 | D2 | 31-10-2002 |
| | | | DE | 59902469 | D1 | 02-10-2002 |
| | | | DK | 1065579 | T3 | 30-12-2002 |
| | | | EP | 1065579 | A1 | 03-01-2001 |
| | | | ES | 2183470 | T3 | 16-03-2003 |
| | | | HR | 20020415 | A2 | 31-08-2003 |
| | | | HU | 0203758 | A2 | 28-03-2003 |
| | | | JP | 2003515209 | T | 22-04-2003 |
| | | | MX | PA02004927 | A | 14-10-2003 |
| | | | NO | 20022373 | A | 04-07-2002 |
| | | | NZ | 518890 | A | 29-04-2005 |
| | | | PL | 356107 | A1 | 14-06-2004 |
| | | | PT | 1065579 | E | 31-01-2003 |
| | | | RU | 2244337 | C2 | 10-01-2005 |
| | | | SI | 1065579 | T1 | 31-10-2003 |
| | | | SK | 6652002 | A3 | 06-11-2002 |
| KR 20080042782 | A | 15-05-2008 | NONE | | | |

EPO FORM P0459

For more details about this annex : see Official Journal of the European Patent Office, No. 12/82